# EUROPEAN PATENT APPLICATION

(11) **EP 4 717 741 A1**
(43) Date of publication of application: **01.04.2026**
(21) Application number: 25201002.0
(22) Date of filing: 09.09.2025
(51) Int. Cl.: C09D 11/107, C09D 11/326, C09D 11/322

(54) **INKJET INK**

(30) Priority: 26.09.2024 JP 2024167723
(71) Applicant: KYOCERA Document Solutions Inc., Osaka-shi, Osaka 540-8585 (JP)
(72) Inventor: OZAWA, Noriaki, Osaka-shi, Osaka, 540-8585 (JP)
(74) Representative: Viering, Jentschura & Partner mbB Patent- und Rechtsanwälte

(57) **Abstract**

An inkjet ink includes: a pigment; a cyclohexylmethacrylate/methacrylic acid copolymer having a weight average molecular weight of 7,000 or more and 15,000 or less and a molecular weight distribution of 1.0 or more and 1.5 or less; and water. The inkjet ink has surface tension of 30 mN/m or less.

## Description

### Field

The present disclosure relates to an inkjet ink.

### Background

Japanese Patent Application Laid-open No. 2006-117817 discloses an inkjet ink for recording an image on a recording medium such as paper. In an inkjet recording apparatus, it is advantageous for an inkjet ink to have high permeability into a recording medium in order to record images on recording media at high speed. In general, in the inkjet ink, it is effective to reduce the surface tension using a surfactant or the like in order to enhance the permeability into the recording media.

### Summary

According to an embodiment of the present disclosure, there is provided an inkjet ink, including: a pigment; a cyclohexylmethacrylate/methacrylic acid copolymer having a weight average molecular weight of 7,000 or more and 15,000 or less and a molecular weight distribution of 1.0 or more and 1.5 or less; and water. The inkjet ink has surface tension of 30 mN/m or less.

### Detailed Description

In inkjet inks, generally, the lower the surface tension, the more likely satellite droplets separately from the main droplet are generated when being ejected from the recording head. Therefore, in inkjet inks having low surface tension, for example, defects such as a decrease in image quality due to satellite droplets impacted around the position of the recording medium at which the main droplet impacts.

In view of the circumstances as described above, it is an object of the present disclosure to provide an inkjet ink capable of achieving both permeability into a recording medium and a coalesce property during ejection simultaneously.

An embodiment of the present disclosure will be described.

### [Configuration of ink]

### (Schematic configuration)

An inkjet ink according to an embodiment of the present disclosure (hereinafter, referred to simply as an "ink") includes a pigment a, a pigment dispersion resin b, a surfactant c, and water. The ink according to this embodiment is a water-based ink that is ejected from a recording head of an inkjet recording apparatus onto a recording medium to record an image on the recording medium. The recording medium on which an image is to be recorded by the ink according to this embodiment includes a fiber such as a cellulose fiber. Examples of such a recording medium include plain paper, copy paper, recycled paper, thin paper, and thick paper.

The ink according to this embodiment is configured to have low surface tension in order to improve the permeability on a recording medium, specifically, surface tension of 30 mN/m or less. Further, the ink according to this embodiment favorably has surface tension of 25 mN/m or more. Note that in this embodiment, the surface tension is measured by a high-precision surface tension meter "DY-700" manufactured by Kyowa Interface Science Co., Ltd. In the ink according to this embodiment, by using the pigment dispersion resin b having a specific configuration, it is possible to ensure a property that makes it difficult to generate satellite droplets and is easy to coalesce as one liquid droplet when ejected from a recording head (hereinafter, referred to as a "coalesce property") even with a configuration having low surface tension. Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

### (Pigment dispersion resin b)

In the ink according to this embodiment, the pigment dispersion resin b is blended as a dispersant that is adsorbed on the surface of the pigment a to enhance the dispersibility of the pigment a in the solvent. In the ink according to this embodiment, fine particles of a cyclohexylmethacrylate/methacrylic acid copolymer are used as the pigment dispersion resin b. In the pigment dispersion resin b, cyclohexylmethacrylate forms a hydrophobic segment and methacrylic acid forms a hydrophilic segment. The pigment dispersion resin b loses its inherent viscosity when adsorbed on the pigment a. In the inkjet ink according to this embodiment, the effect of cyclohexylmethacrylate forming a hydrophobic segment improves the adsorption of the pigment dispersion resin b on the pigment a, thereby achieving low viscosity.

Further, the pigment dispersion resin b has a weight average molecular weight of 7,000 or more and 15,000 or less and a molecular weight distribution of 1.0 or more and 1.5 or less. That is, in the pigment dispersion resin b, there are few molecules having a large molecular weight because the weight average molecular weight is relatively small and the molecular weight distribution is sharp. For this reason, the viscosity of the pigment dispersion resin b itself is also low. For this reason, in the ink according to this embodiment, the pigment dispersion resin b that is not adsorbed on the pigment a is also less likely to cause an increase in viscosity. Note that in this embodiment, the weight average molecular weight and the molecular weight distribution are measured using gel permeation chromatography ("HLC-8020GPC" manufactured by TOSOH CORPORATION) in accordance with the following conditions.
·Column: "TSKgel SuperMultiporeHZ-H" manufactured by TOSOH CORPORATION(semi-microcolumn of 4.6 mm I.D. × 15 cm)
·Number of columns: 3
·Eluent: tetrahydrofuran
·Flow rate: 0.35 mL/min
·Sample injection amount: 10 µL
·Measurement temperature: 40°C
·Detector: IR detector
Note that the calibration curve is created by selecting seven types, i.e., F-40, F-20, F-4, F-1, A-5000, A-2500, and A-1000, and n-propylbenzene from TSKgel standard polystyrene manufactured by TOSOH CORPORATION.

Therefore, in the ink according to this embodiment, the viscosity remains low due to the effect of such a pigment dispersion resin b, so that satellite droplets are less likely to form when ejected from a recording head and liquid droplets with a high coalesce property are likely to form.

In the ink according to this embodiment, in order to sufficiently achieve the above effect of the pigment dispersion resin b, the content of the pigment dispersion resin b is favorably 4.0 mass% or more. Further, in the ink according to this embodiment, in order to ensure high dispersion stability and prevent the amount of the pigment dispersion resin b adsorbed on the pigment a from becoming excessive, the content of the pigment dispersion resin b is favorably 8.0 mass% or less.

### (Surfactant c)

In the ink according to this embodiment, the surfactant c may be blended to achieve surface tension of 30 mN/m or less. The surfactant c has the effect of enhancing the wettability of the ink on a recording medium and the effect of enhancing the compatibility and dispersion stability of each component included in the ink. Examples of the surfactant c blended in the ink according to this embodiment include an anionic surfactant, a cationic surfactant, a non-ionic surfactant, and an amphoteric surfactant. The surfactant c is favorably a non-ionic surfactant. The non-ionic surfactant is favorably a surfactant having an acetylene bond, more favorably a surfactant having an acetylene glycol structure or an acetylene alcohol structure.

### (Water)

In the ink according to this embodiment, ion exchanged water, purified water, distilled water, or the like can be used as water. In the ink according to this embodiment, from the viewpoints of dryness and ejection reliability, the content of water is favorably 5.0 mass% or more and 7.0 mass% or less.

### (Other components)

In the ink according to this embodiment, components other than the above may be blended as necessary. For example, in the ink according to this embodiment, a surfactant can be used as a dispersant having the effect of enhancing the dispersibility of the pigment a in the solvent. The surfactant blended as a dispersant is blended separately from the surfactant c, and reduces the interfacial tension between the pigment a and the solvent, thereby enhancing the dispersibility of the pigment a in the solvent. As such a surfactant, for example, a non-ionic surfactant or an anionic surfactant can be used.

Further, in the ink according to this embodiment, various additives such as a water-soluble moisturizing agent, a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Examples]

Inks were prepared and evaluated as Examples 1 to 3 of the present disclosure.

### (Preparation of inks)

In Examples 1 to 3, first, a pigment dispersion liquid including the pigment a dispersed in water was prepared. The pigment dispersion liquid was prepared by blending the pigment a, the pigment dispersion resin b, sodium hydroxide, OLFINE (registered trademark) E1010, and water such that the content shown in Table 1 was achieved.

**(Table 1)**

| Component | Content (mass%) |
|---|---|
| Pigment a | 15 |
| Pigment dispersion resin b | 6.0 |
| Sodium hydroxide | 0-1.0 |
| OLFINE E1010 | 0.5 |
| Water | Remainder |

Sodium hydroxide was blended as a neutralizer for neutralizing the pigment dispersion resin b. OLFINE (registered trademark) E1010 is blended as a dispersant for enhancing the dispersibility of the pigment a in the solvent and is a non-ionic surfactant manufactured by Nissin Chemical Co., Ltd. In all of Examples 1 to 3, Pigment Blue 15:3 ("LIONOL BLUE FG-7351" manufactured by Toyocolor Co., Ltd.) was used as the pigment a and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. The grain size distribution of the pigment dispersion was measured using "Zetasizer Nano" manufactured by Sysmex Corporation with a diluted solution of the pigment dispersion liquid diluted 300 times with ion exchanged water.

Next, the ink according to Example 1 was prepared. The ink according to Example 1 was prepared by mixing the above pigment dispersion liquid, the surfactant c, the water-soluble moisturizing agent, and water such that the content shown in Table 2 was achieved. In Example 1, "SURFYNOL 104" manufactured by Nissin Chemical Co., Ltd. was used as the surfactant c and 3-methyl-1,5-pentanediol was used as a water-soluble moisturizing agent. Note that the content of the surfactant c was determined for each sample.

**(Table 2)**

| Component | Content (mass%) |
|---|---|
| Pigment dispersion liquid | 53.3 |
| Surfactant c | Determine for each sample |
| Water-soluble moisturizing agent | 30 |
| Water | Remainder |

In the preparation of the ink according to Example 1, the components shown in Table 2 were added in order while stirring the solvent using a stirrer. Further, each ink after stirring was filtered using a filter having a pore size of φ5 µm to remove foreign substances, dirt, coarse particles, and the like.

Further, inks according to Examples 2 and 3 were prepared. The inks according to Examples 2 and 3 were prepared by blending the above pigment dispersion liquid, the surfactant c, a water-soluble moisturizing agent, and water such that the content shown in Table 3 was achieved. In Examples 2 and 3, "SURFYNOL 104" manufactured by Nissin Chemical Co., Ltd. was used as the surfactant c and 3-methyl-1,5-pentanediol was used as the water-soluble moisturizing agent.

**(Table 3)**

| Component | Content (mass%) |
|---|---|
| Pigment dispersion liquid | 53.3 |
| Surfactant c | 0.7 |
| Water-soluble moisturizing agent | 30 |
| Water | Remainder |

In the preparation of the inks according to Examples 2 and 3, the components shown in Table 3 were added in order while stirring the solvent using a stirrer. Further, each ink after stirring was filtered using a filter having a pore size of φ5 µm to remove foreign substances, dirt, coarse particles, and the like.

An example of a method of preparing the cyclohexylmethacrylate/methacrylic acid copolymer used as the pigment dispersion resin b in each ink will be described below. First, a stirrer, a nitrogen introduction tube, a condenser (stirrer), and a dropping funnel were placed in a four-necked flask (capacity: 1000 mL). Next, 100 g of isopropyl alcohol and 300 g of methyl ethyl ketone were added to the flask. The content of the flask was heated to reflux at 70°C while bubbling nitrogen into it.

Further, 64.0 g of cyclohexylacrylate, 36.0 g of methacrylic acid, and 0.4 g of azobisisobutyronitrile (AIBN, a polymerization initiator) were mixed to obtain a monomer solution. The monomer solution was added dropwise to the flask over approximately 2 hours while being heated to reflux at 70°C. After the adding dropwise, the content of the flask was heated to reflux at 70°C for further 6 hours. A methyl ethyl ketone solution containing 0.2 g of AIBN was added dropwise to the flask over 15 minutes. After the adding dropwise, the content of the flask was heated to reflux at 70°C for further 5 hours. In this way, a cyclohexylmethacrylate/methacrylic acid copolymer was obtained.

### (Evaluation of ink)

For the inks according to Examples 1 to 3, permeability on a recording medium and a coalesce property during ejection were evaluated.

### ·Method of evaluating permeability

In the evaluation of permeability, a short-term rubfastness test was conducted. That is, for each ink, it was determined that the higher the short-term rubfastness, the higher permeability, and the lower the short-term rubfastness, the lower permeability. In the short-term rubfastness test, an inkjet recording apparatus ("TASKalfa Pro 15000c" manufactured by KYOCERA Document Solutions Inc.)was used as a tester. In the tester, the drive voltage was set such that the amount of ink to be ejected from one recording head was 11 pL. Using the tester, a solid image of 10 cm × 10 cm was formed on a recording medium ("Vitality" manufactured by Xerox Corporation). A different recording medium was slid back and forth five times on the solid image within 15 seconds after forming while being pressed against it with a load of 500 g. The image density of the sliding surface of the different recording medium was measured by a spectrodensitometer (FD-5, manufactured by Konica Minolta, Inc.). The image density obtained by the measurement was used as an evaluation value for permeability of each ink. Using the evaluation value for permeability of each ink, evaluation was performed in accordance with the following criteria A and B. Inks with the evaluation for permeability of A are evaluated to "Pass", and inks with the evaluation of B are evaluated to "Fail".
A (Good): 0.2% or less
B (Poor): exceeding 0.2%

### ·Method of evaluating coalesce property

In the evaluation of a coalesce property, the length of a splash appearing in the image recorded on the recording medium with each ink was measured. That is, assuming that a splash was formed by satellite droplets, it was determined in each ink that the shorter the length of the splash, the higher the coalesce property, and the longer the length of the splash, the lower the coalesce property. In the measurement of the length of the splash, using an inkjet recording apparatus ("TASKalfa Pro 15000c" manufactured by KYOCERA Document Solutions Inc.), the margins of a recording medium (A4 size paper) were set to 5 mm and a straight line image (dot line) was formed thereon. The length of the splash extending from the dot line in the conveying direction was measured, and the maximum value was used as an evaluation value for the coalesce property. Using the evaluation value for the coalesce property of each ink, evaluation was performed in accordance with the following criteria A and B. Inks with the evaluation for a coalesce property of A are evaluated to "Pass", and inks with the evaluation of B are evaluated to "Fail".
A (Good): 0.2 mm or less
B (Poor): exceeding 0.2 mm

### (Example 1)

In Example 1, ink samples 1 to 5 having various different surface tensions were prepared by adjusting the content of the surfactant c, and the above evaluation was performed on the samples 1 to 5. In all of the samples 1 to 5 according to Example 1, a cyclohexylmethacrylate (CyMMA)/methacrylic acid (MAA) copolymer (CyMMA: 64 mass%, MAA: 36 mass%, the acid value: 160 mg KOH/g) was used as the pigment dispersion resin b.

Table 4 shows the content of the surfactant c used in the samples 1 to 5, the surface tension, and the evaluation results of permeability and a coalesce property for the samples 1 to 5. In all of the samples 3 to 5, favorable evaluation results for both permeability and a coalesce property were obtained. On the other hand, in the samples 1 and 2 having low surface tension, the permeability was evaluated to "Fail". This is presumably because in the samples 1 and 2, the permeability into a recording medium was insufficient.

**(Table 4)**

| No. | Content (mass%) of surfactant c | Surface tension (mN/m) | Evaluation result | |
|---|---|---|---|---|
| | | | Permeability | Coalesce property |
| 1 | 0.3 | 32.0 | B | A |
| 2 | 0.5 | 30.5 | B | A |
| 3 | 0.7 | 29.7 | A | A |
| 4 | 1.0 | 29.0 | A | A |
| 5 | 1.3 | 29.0 | A | A |

### (Example 2)

In Example 2, ink samples 6 to 8 were prepared by the above method using pigment dispersion resins b having various different hydrophobic segments, and the above evaluation was performed on the samples 6 to 8. In the sample 6, a CyMMA/MAA copolymer was used as the pigment dispersion resin b. In the sample 7, a benzylmethacrylate (BzMMA) /MAA copolymer was used as the pigment dispersion resin b. In the sample 8, a styrene (St)/MAA copolymer was used as the pigment dispersion resin b. In all of the samples 6 to 8, the surface tension was 30 mN/m or less.

Table 5 shows the hydrophobic segment, the hydrophilic segment, the molecular weight distribution, and the acid value of the pigment dispersion resin b used in the samples 6 to 8, and the evaluation results of permeability and a coalesce property for the samples 6 to 8. In the sample 6, favorable evaluation results for both permeability and a coalesce property were obtained. On the other hand, in the samples 7 and 8 in which the hydrophobic segment of the pigment dispersion resin b is not cyclohexylmethacrylate, the coalesce property was evaluated to "Fail". This is presumably because in the samples 7 and 8, the viscosity was not sufficiently reduced due to the insufficient adsorption of the pigment dispersion resin b on the pigment a.

**(Table 5)**

| No. | Pigment dispersion resin b | | | | Evaluation result | |
|---|---|---|---|---|---|---|
| | Hydrophobic segment | Hydrophilic segment | Molecular weight distribution | Acid value (mgKOH/g) | Permeability | Coalesce property |
| 6 | CyMMA | MAA | 1.0 | 160 | A | A |
| 7 | BzMMA | MAA | 1.2 | 160 | A | B |
| 8 | St | MAA | 1.1 | 160 | A | B |

### (Example 3)

In Example 3, ink samples 9 to 23 were prepared by the above method using pigment dispersion resins b having various different weight average molecular weights and molecular weight distributions, and the above evaluation was performed on the samples 9 to 23. In all of the samples 9 to 23 according to Example 3, a cyclohexylmethacrylate (CyMMA)/methacrylic acid (MAA) copolymer (CyMMA: 64 mass%, MAA: 36 mass%, the acid value: 160 mg KOH/g) was used as the pigment dispersion resin b. In all of the samples 9 to 23, the surface tension was 30 mN/m or less.

Table 6 shows the weight average molecular weight and molecular weight distribution of the pigment dispersion resin b used in the samples 9 to 23, and the evaluation results of permeability and a coalesce property for the samples 9 to 23. In the samples 10 to 12, 15 to 17, and 19 to 21, favorable evaluation results for both permeability and a coalesce property were obtained. On the other hand, in the sample 9 in which the pigment dispersion resin b has a small molecular weight distribution, the permeability was evaluated to "Fail". This is presumably because the permeability into a recording medium was insufficient due to the insufficient adsorption force of the pigment dispersion resin b on the pigment a. In the sample 13 in which the pigment dispersion resin b has a large molecular weight distribution, the coalesce property was evaluated to "Fail". This is presumably because in the sample 13, the viscosity increased due to the effect of molecules having a large molecular weight present in the pigment dispersion resin b. In the samples 14 in which the pigment dispersion resin b has a small weight average molecular weight, the permeability was evaluated to "Fail". This is presumably because in the sample 14, only the pigment a remained on the surface of the recording medium due to the insufficient adsorption force of the pigment dispersion resin b on the pigment a. In the sample 18 in which the pigment dispersion resin b has a large weight average molecular weight, the coalesce property was evaluated to "Fail". This is presumably because in the sample 18, the viscosity increased due to the effect of the pigment dispersion resin b having a large weight average molecular weight. In the sample 22 in which the pigment dispersion resin b has a small molecular weight distribution, the coalesce property was evaluated to "Fail". This is presumably because in the sample 22, a local difference in surface tension occurred. In the sample 23 in which the pigment dispersion resin b has a small molecular weight distribution, the permeability was evaluated to "Fail". This is presumably because in the sample 23, only the pigment a remained on the surface of the recording medium due to the insufficient adsorption force of the pigment dispersion resin b on the pigment a.

**(Table 6)**

| No. | Pigment dispersion resin b | | Evaluation result | |
|---|---|---|---|---|
| | Weight average molecular weight | Molecular weight distribution | Permeability | Coalesce property |
| 9 | 10,000 | 0.8 | B | A |
| 10 | 10,050 | 1.0 | A | A |
| 11 | 11,000 | 1.2 | A | A |
| 12 | 9,500 | 1.5 | A | A |
| 13 | 9,000 | 1.6 | A | B |
| 14 | 6,000 | 1.2 | B | A |
| 15 | 7,000 | 1.2 | A | A |
| 16 | 8,000 | 1.2 | A | A |
| 17 | 15,000 | 1.2 | A | A |
| 18 | 16,000 | 1.2 | A | B |
| 19 | 10,000 | 1.5 | A | A |
| 20 | 14,500 | 1.5 | A | A |
| 21 | 8,000 | 1.5 | A | A |
| 22 | 15,000 | 0.8 | A | B |
| 23 | 8,200 | 0.8 | B | A |

## Claims

1. An inkjet ink, comprising:
a pigment;
a cyclohexylmethacrylate/methacrylic acid copolymer having a weight average molecular weight of 7,000 or more and 15,000 or less and a molecular weight distribution of 1.0 or more and 1.5 or less; and
water,
the inkjet ink having surface tension of 30 mN/m or less.
